# EUROPÄISCHE PATENTSCHRIFT

(11) **EP 3 586 044 B1**
(45) Veröffentlichungstag und Bekanntmachung des Hinweises auf die Patenterteilung: **05.04.2023**
(21) Anmeldenummer: 18707274.9
(22) Anmeldetag: 12.02.2018
(51) Int. Cl.: F16H 61/688, F16H 61/02, F16H 59/14, F16H 59/18, F16H 59/44, F16H 59/52, F16H 59/66, F16H 59/72, F16H 59/36, F16H 61/00, F16H 59/68

(54) **VERFAHREN ZUR STEUERUNG EINES AUTOMATIKGETRIEBES**
METHOD FOR CONTROLLING AN AUTOMATIC TRANSMISSION
PROCEDE POUR COMMANDER UNE BOITE DE VITESSES AUTOMATIQUE

(30) Priorität: 27.02.2017 DE 102017203108
(43) Veröffentlichungstag der Anmeldung: 01.01.2020
(73) Patentinhaber: Volkswagen Aktiengesellschaft, 38440 Wolfsburg (DE)
(72) Erfinder: SCHAEFER, Stephan, 38458 Velpke (DE)
(86) Internationale Anmeldenummer: PCT/EP2018/053451
(87) Internationale Veröffentlichungsnummer: WO 2018/153718

(56) Entgegenhaltungen:
- DE-A1- 4 120 566
- DE-A1-102005 048 522
- DE-B4- 10 084 468
- US-A- 5 738 605
- US-B2- 7 578 766

## Beschreibung

Die Erfindung betrifft ein Verfahren zur Steuerung eines Automatikgetriebes eines Fahrzeuges, insbesondere eines Doppelkupplungsgetriebes, gemäß den Merkmalen des Oberbegriffes des Patentanspruches 1.

In Automatikgetrieben werden Schaltungen üblicherweise anhand von festen Schaltpunkten in Abhängigkeit von der aktuellen Motordrehzahl und/oder der aktuellen Fahrzeuggeschwindigkeit, dem aktuellen Fahrpedalwert sowie vom gewählten Schaltprogramm (ECO-Modus, Sportmodus etc.) durchgeführt.

Aus der DE 10 2010 041 322 A1 ist ein Verfahren zur Steuerung von Schaltungen eines als Doppelkupplungsgetriebe ausgebildeten Getriebes bzw. eines Teilgetriebes bekannt. Um kurze Schaltzeiten zu ermöglichen und einen komfortablen und zuverlässigen Fahrbetrieb zu gewährleisten wird die Doppelkupplung als eine Getriebebremse und/oder Motorbremse für eine Drehzahlanpassung der zu schaltenden Komponenten angesteuert.

Aus der EP 1 449 708 A1 ist ein Verfahren zur Steuerung eines Doppelkupplungsgetriebes bekannt, in dem anhand der Fahrpedalstellung, dem aktuell eingelegten Gang und der Kupplungsgeschwindigkeit eine Soll-Motorwellendrehzahl bestimmt wird und die über die Kupplung übertragene Drehzahl derart kontinuierlich geändert wird, dass die Motorwellendrehzahl auf die Soll-Motorwellendrehzahl angehoben wird.

Aus der US 6,909,955 B2 ist ein Verfahren zur zeitlichen Steuerung der Schaltvorgänge eines Doppelkupplungsgetriebes bekannt, wobei die aktuelle Getriebeausgangsdrehzahl gemessen und die für jeden möglichen Schaltvorgang erforderliche Zeit sowie für jeden möglichen Schaltvorgang ein Ausgangsdrehzahl-Modifikationswert bestimmt wird.

Aus der EP 1 439 087 A2 ist ein Verfahren zur Steuerung und Regelung des Kupplungs- und Motordrehmomentes während eines Schaltvorgangs eines automatisierten Schaltgetriebes oder eines Doppelkupplungsgetriebes bekannt.

Aus der DE 10 2008 020 956 A1 ist eine Fahrzeuggetriebesteuervorrichtung bekannt, welche ein Getriebe-Kickdown-Verhalten bereitstellt, bei dem der Fahrzeuglenker in allen Gangwechseln keinen Antriebskraftverlust bemerkt.

Die DE 100 84 468 B4 offenbart ein Verfahren zur Steuerung eines Automatikgetriebes mit einem Haupt- und einem Vorlegegetriebe, wobei bei einem Beschleunigungsvorgang des Fahrzeugs mindestens eine oder mehrere Rückschaltungen durchgeführt werden und ausgehend von einer Quellgangskombination eine Zielgangskombination eingelegt wird.

Die im Stand der Technik bekannten Verfahren zur Steuerung von Automatikgetrieben sind jedoch noch nicht optimal ausgebildet. So ziehen manche der aus dem Stand der Technik bekannten Verfahren zur Steuerung von Automatikgetrieben Schaltungen in Betracht, welche unter Umständen, zum Beispiel aufgrund von situationsbedingt langen Schaltzeiten, nicht unbedingt sinnvoll sind und sich negativ auf den Beschleunigungsverlauf, beispielsweise in Form von Beschleunigungsverzögerungen und/oder Beschleunigungseinbrüchen auswirken können.

Der Erfindung liegt daher die Aufgabe zu Grunde, das eingangs genannte Verfahren, derart auszugestalten und weiterzubilden, dass der dadurch erzielte Beschleunigungsverlauf verbessert wird.

Die der Erfindung zugrunde liegende Aufgabe wird nun zunächst durch die Merkmale des Patentanspruches 1 gelöst. Dabei werden in dem Verfahren bei einem Beschleunigungsvorgang des Fahrzeugs insbesondere mindestens eine oder mehrere Rückschaltungen durchgeführt und ausgehend von einem Quellgang ein Zielgang eingelegt.

In dem Verfahren wird für eine Rückschaltung in einen ersten Sollzielgang und für mindestens eine Rückschaltung in mindestens einen zweiten höheren, insbesondere nächsthöheren, Sollzielgang über einen zu erwartenden, bestimmten Beschleunigungszeitraum und unter Berücksichtigung von in dem zu erwartenden, bestimmten Beschleunigungszeitraum zu erwartenden Schaltvorgängen die jeweilige Fahrzeugbeschleunigung berechnet und als Zielgang derjenige Sollzielgang ausgewählt, welcher über den zu erwartenden, bestimmten Beschleunigungszeitraum die höchste Fahrzeugbeschleunigung ermöglicht und/oder die wenigsten Schaltvorgänge erfordert, wobei sich der zu erwartende, bestimmte Beschleunigungszeitraum zumindest bis zum Abschluss einer auf die Rückschaltung folgende Hochschaltung erstreckt.

Zum Beispiel kann sich der Beschleunigungsverlauf bei einer Rückschaltung von einem sechsten Gang in einen zweiten Gang deutlich von dem Beschleunigungsverlauf bei einer Rückschaltung vom sechsten Gang in einen dritten Gang unterscheiden. Der Unterschied im Beschleunigungsverlauf liegt dabei nicht nur in der unterschiedlichen, durch die unterschiedlichen Zielgänge erzielbaren Beschleunigung, sondern wird wesentlich durch die Schaltzeiten der Gangwechsel bestimmt.

Zum einen können Schaltungen von einem bestimmten Quellgang in unterschiedliche Zielgänge jeweils unterschiedlich lange Einzelschaltzeiten aufweisen und unterschiedlich lange dauern. Zum Beispiel kann eine 3-2-Rückschaltung viel schneller abwickelbar sein als eine 6-2-Rückschaltung.

Zum Anderen kann von einem bestimmten Quellgang in manche Zielgänge direkt gewechselt werden, wohingegen vom gleichen bestimmten Quellgang andere Zielgänge nur über einen oder mehrere zusätzliche Schaltvorgänge über weitere Gänge / "Zwischengänge" erreichbar sind. Dies kann die für die Quellgang-Zielgang-Schaltung insgesamt erforderliche Schaltzeit, beispielsweise die Gesamtschaltzeit, noch deutlich stärker beeinflussen als unterschiedliche Einzelschaltzeiten.

Dieser oben beschriebene Effekt kann insbesondere bei Doppelkupplungsgetrieben auftreten, bei denen ein Teil der Gänge, beispielsweise die geraden Gänge, zum Beispiel der zweite Gang und der vierte Gang und gegebenenfalls der sechste Gang (et cetera) einer Getriebeeingangswelle und ein anderer Teil der Gänge, beispielsweise die ungeraden Gänge, zum Beispiel der erste Gang und der dritte Gang und - gegebenenfalls der fünfte Gang und gegebenenfalls der siebte Gang (et cetera) der anderen Getriebeeingangswelle zugeordnet sind. Hierbei kann üblicherweise von einem, einer Getriebeeingangswelle zugeordneten Gang, beispielsweise vom sechsten Gang, direkt in einen, der anderen Getriebeeingangswelle zugeordneten Gang, beispielsweise in den dritten Gang, beispielsweise in Form einer 6-3-Rückschaltung, geschaltet werden, wohingegen für eine Schaltung in einen, der gleichen Getriebeeingangswelle zugeordneten Gang, beispielsweise in den zweiten Gang, eine Zwischenschaltung über einen, der anderen Getriebeeingangswelle zugeordneten Gang, zum Beispiel den fünften Gang, beispielsweise in Form einer 6-5-2-Rückschaltung, erforderlich ist.

Eine Reduzierung von Schaltvorgängen und beispielsweise von Schaltzeiten kann sich vorteilhaft auf die Fahrzeugbeschleunigung auswirken. Dabei kann beispielsweise durch Auswahl eines Zielganges, welcher zwar als solcher ein geringeres Beschleunigungsvermögen aufweist, durch eine Reduzierung von Schaltvorgängen und/oder von beispielsweise Schaltzeiten insgesamt eine höhere Fahrzeugbeschleunigung erzielt werden, als durch einen Gang mit einer stärkeren Beschleunigung, dessen Einlegen jedoch mit zusätzlichen und/oder längeren Schaltvorgängen und/oder Schaltzeiten verbunden ist. So kann der Beschleunigungsverlauf insbesondere insgesamt verbessert werden und beispielsweise ein "harmonischerer Beschleunigungsverlauf" des Fahrzeuges / Kraftfahrzeuges erzielt werden.

Im Rahmen einer Ausgestaltung wird für die Rückschaltung in den ersten Sollzielgang die Fahrzeuggeschwindigkeit berechnet, welche nach Durchlaufen des zu erwartenden, bestimmten Beschleunigungszeitraums unter Berücksichtigung von in dem zu erwartenden, bestimmten Beschleunigungszeitraum folgenden Schaltvorgängen erreichbar ist. Dann wird der Zeitraum berechnet, über welchen diese Fahrzeuggeschwindigkeit durch die mindestens eine Rückschaltung in den mindestens einen zweiten, höheren Sollzielgang erreichbar ist. Als Zielgang wird dann derjenige Sollzielgang ausgewählt, durch welchen diese Fahrzeuggeschwindigkeit in einem geringeren Zeitraum erreichbar ist. So kann das Verfahren auf einfache Weise umgesetzt werden.

Im Rahmen einer weiteren, zusätzlichen oder alternativen Ausgestaltung wird sowohl für die Rückschaltung in den ersten Sollzielgang als auch für die mindestens eine Rückschaltung in den mindestens einen zweiten, höheren Sollzielgang für alle in dem zu erwartenden, bestimmten Beschleunigungszeitraum zu erwartenden Schaltungen jeweils die Einzelschaltzeit und aus der Summe der Einzelschaltzeiten der zu erwartenden Schaltungen eine Gesamtschaltzeit berechnet. Als Zielgang wird dann derjenige Sollzielgang ausgewählt, welcher über den zu erwartenden, bestimmten Beschleunigungszeitraum die geringere Gesamtschaltzeit aufweist. So kann das Verfahren ebenfalls auf einfache Weise umgesetzt werden.

Im Rahmen einer weiteren, zusätzlichen oder alternativen Ausgestaltung setzt sich die Einzelschaltzeit einer Schaltung aus einer Gangeinlege- beziehungsweise -auslegezeit, einer Kupplungsbefüllungszeit, einer Schaltabwicklungszeit, einer Kupplungsüberschneidungszeit und einer Drehzahlüberführungszeit zusammen.

Im Rahmen einer weiteren, zusätzlichen oder alternativen Ausführungsform erfolgt die Berechnung der Fahrzeugbeschleunigung und/oder der Fahrzeuggeschwindigkeit unter Berücksichtigung der Topographie, insbesondere der Steigung, des in dem zu erwartenden, bestimmten Beschleunigungszeitraum von dem Fahrzeug zu erwartenden, durchfahrenen Geländes. So kann bei der Berechnung eine weitere Einflussgröße berücksichtigt werden. Zum Beispiel kann an einer positiven Steigung eine Rückschaltung zu niedrigeren Gängen sinnvoller sein als an einer negativen Steigung, also einem Gefälle, wo ein größerer erreichbare Beschleunigungswert die Zeitdauer, in welcher der niedrige Gang genutzt werden kann, stark vermindert.

Im Rahmen einer weiteren, zusätzlichen oder alternativen Ausgestaltung erfolgt die Berechnung der Fahrzeugbeschleunigung und/oder der Fahrzeuggeschwindigkeit unter Berücksichtigung der aktuellen Beladung des Fahrzeugs. So kann bei der Berechnung eine weitere Einflussgröße berücksichtigt werden.

Im Rahmen einer weiteren, zusätzlichen oder alternativen Ausgestaltung erfolgt die Berechnung der Fahrzeugbeschleunigung und/oder der Fahrzeuggeschwindigkeit temperaturabhängig, insbesondere unter Berücksichtigung der temperaturabhängigen Viskosität von Hydraulikmitteln des Getriebes. So kann bei der Berechnung eine weitere Einflussgröße berücksichtigt werden.

Im Rahmen einer weiteren, zusätzlichen oder alternativen Ausgestaltung wird bei der Auswahl des Zielgangs ein Gewichtungsfaktor zur Gewichtung zugunsten eines niedrigeren oder höheren Zielgangs verwendet. Um ein spektakuläres Fahrerlebnis zu erzielen, beispielsweise für einen sogenannten Sport-Modus, kann durch den Gewichtungsfaktor zum Beispiel zugunsten des niedrigeren Zielgangs gewichtet werden. Um Verbrauch und/oder Abnutzung zu reduzieren, zum Beispiel für einen so genannten Efficiency-Modus / Eco-Modus, kann durch den Gewichtungsfaktor zum Beispiel zugunsten des höheren Zielgangs gewichtet werden.

Der erste Sollzielgang kann beispielsweise anhand der aktuellen Motordrehzahl und/oder der aktuellen Fahrzeuggeschwindigkeit und des aktuellen Fahrpedalwertes sowie gegebenenfalls eines aktuell gewählten Schaltprogramms, beispielsweise eines Sport-Modus oder eines Efficiency-Modus / Eco-Modus, und/oder mittels Leistungsbedarfsrechnung, insbesondere Radmomentenbedarfsrechnung, errechnet werden.

Die eingangs genannten Nachteile sind daher vermieden und entsprechende Vorteile sind erzielt.

Es gibt nun eine Vielzahl von Möglichkeiten, das erfindungsgemäße Verfahren in vorteilhafter Art und Weise auszugestalten und weiterzubilden. Hierfür darf zunächst auf die dem Patentanspruch 1 nachgeordneten Patentansprüche verwiesen werden. Im Folgenden werden einige bevorzugte Ausgestaltung des erfindungsgemäßen Verfahrens anhand der Zeichnung und der dazugehörigen Beschreibung näher erläutert. In der Zeichnung zeigt:

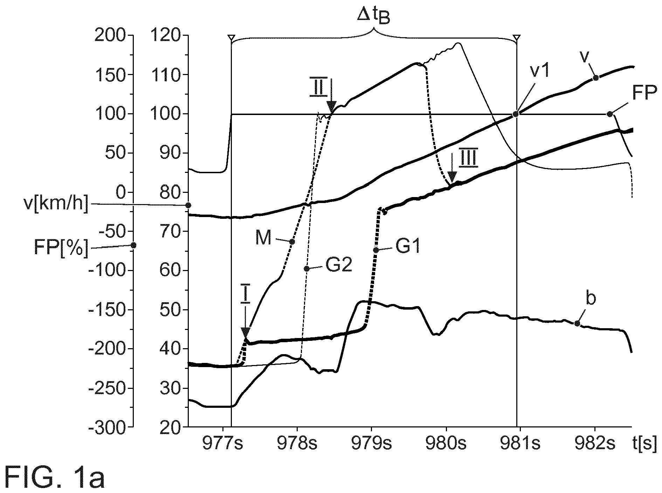

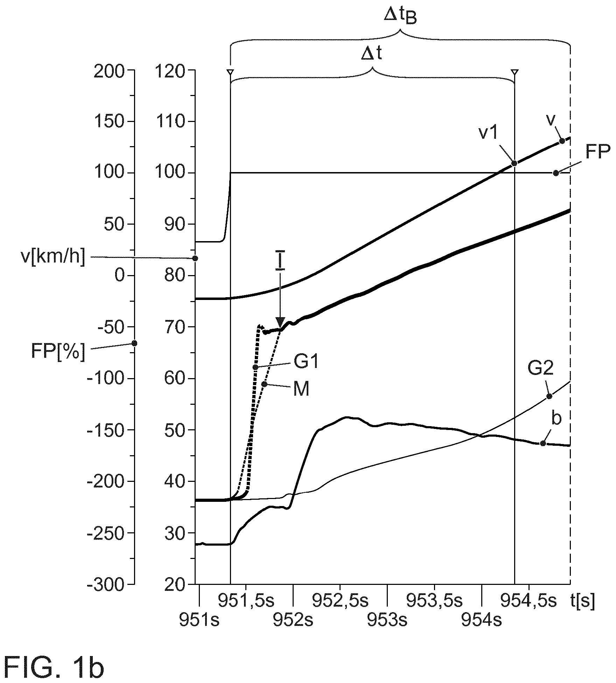

- Fig. 1a, 1b: einen Graphen zur Veranschaulichung einer Ausführungsform des erfindungsgemäßen Verfahrens zur Steuerung eines Automatikgetriebes anhand eines Doppelkupplungsgetriebes, bei dem ungerade Gänge, insbesondere ein erster, dritter und fünfter Gang einer ersten Getriebeeingangswelle und gerade Gänge, insbesondere ein zweiter, vierter und sechster Gang einer zweiten Getriebeeingangswelle zugeordnet sind.

In den in Fig. 1b und 1b gezeigten Graphen ist die Fahrzeuggeschwindigkeit v in km/h beziehungsweise der Fahrpedalwert FP in % gegen die Zeit t in Sekunden (s) aufgetragen. Zudem ist in den in Fig. 1a und 1b gezeigten Graphen die Fahrzeugbeschleunigung b, die Motorwellendrehzahl M sowie die Drehzahl einer ersten Getriebeeingangswelle G1 und einer zweiten Getriebeeingangswelle G2 eines nicht näher dargestellten Doppelkupplungsgetriebes eines Kraftfahrzeuges gegen die Zeit aufgetragen.

Fig. 1a zeigt das Ergebnis einer Berechnung der Fahrzeugbeschleunigung b über einen zu erwartenden, bestimmten Beschleunigungszeitraum Δt_{B} und unter Berücksichtigung von in dem zu erwartenden, bestimmten Beschleunigungszeitraum Δt_{B} zu erwartenden Schaltvorgängen, beispielsweise mittels der Fahrwiderstandsgleichung und/oder unter Berücksichtigung der Topographie und/oder Fahrzeugbeladung und/oder Temperatur, für eine Rückschaltung vom sechsten Gang als Quellgang in den zweiten Gang als ersten Sollzielgang Z. Der zu erwartende, bestimmte Beschleunigungszeitraum Δt_{B} kann sich beispielsweise zumindest bis zum Abschluss einer auf die Rückschaltung folgenden Hochschaltung erstrecken und zum Beispiel anhand von Daten von Getriebefunktionen, beispielsweise Gangsteller und/oder Kupplungsbefüllung, ermittelt werden. Durch die Verwendung des zu erwartenden, bestimmten Beschleunigungszeitraums Δt_{B} bei der Berechnung kann der Schaltablauf auch über die eigentliche Rückschaltung hinaus bis zur nächsten Hochschaltung durchgespielt werden und auf diese Weise eine Voraussage getroffen werden, welche Vorgehensweise unter den bestehenden Umständen bezüglich einer bestmöglichen Gesamtbeschleunigung "die Bessere" ist.

Fig. 1a veranschaulicht, dass der sechste und zweite Gang der gleichen Getriebeeingangswelle G2, nämlich der zweiten Getriebeeingangswelle G2, zugeordnet sind, eine Mehrfach-Rückschaltung in Form einer 6-5-2-Rückschaltung erfolgt, nämlich zunächst eine erste Rückschaltung I vom sechsten Gang in den fünften Gang und dann eine zweite Rückschaltung II vom fünften Gang in den zweiten Gang erforderlich ist. Fig. 1a veranschaulicht zudem, dass in dem zu erwartenden, bestimmten Beschleunigungszeitraum Δt_{B} zudem anschließend eine Hochschaltung III vom zweiten Gang in den dritten Gang erforderlich ist.

Fig. 1a zeigt, dass in dem zu erwartenden, bestimmten Beschleunigungszeitraum Δt_{B}, zum Beispiel von 3,84 s, welcher sich bis zum Erreichen einer bestimmten Fahrzeuggeschwindigkeit v1, zum Beispiel von 100 km/h, erstrecken kann, im Fall einer Rückschaltung in den zweiten Gang als ersten Sollzielgang Z folglich drei Schaltungen I, II, III erforderlich wären.

Fig. 1a zeigt zudem, dass der resultierende Beschleunigungsverlauf insbesondere im Bereich der zweiten Rückschaltung II und der Hochschaltung III Beschleunigungsverzögerungen und sogar deutliche Beschleunigungseinbrüche, sogenannte Beschleunigungsdellen, aufweist und somit insgesamt "unharmonisch" ist. Dadurch, dass auf die Mehrfach-Rückschaltungen I, II unmittelbar die Hochschaltung III erfolgt, wird durch die natürlicherweise verminderte Beschleunigung innerhalb der Schaltungen I, II, III zudem der Beschleunigungsgewinn aufgrund der durch die Rückschaltungen erreichten höheren Drehzahl und damit erhöhten Motorleistung aufgezehrt.

Fig. 1b zeigt das Ergebnis einer Berechnung der Fahrzeugbeschleunigung b über den zu erwartenden, bestimmten Beschleunigungszeitraum Δt_{B} und unter Berücksichtigung von in dem zu erwartenden, bestimmten Beschleunigungszeitraum Δt_{B} zu erwartenden Schaltvorgängen für eine andere Rückschaltung, nämlich vom sechsten Gang als Quellgang in den dritten Gang als zweiten, höheren, insbesondere nächst höheren, Sollzielgang Z+1 unter den ansonsten gleichen Bedingungen wie bei der in Zusammenhang mit Fig. 1a erfolgten Berechnung.

Fig. 1b veranschaulicht, dass der sechste und dritte Gang unterschiedlichen Getriebeeingangswellen G2,G1, nämlich der zweiten Getriebeeingangswelle G2 beziehungsweise der ersten Getriebeeingangswelle G1, zugeordnet sind, und eine direkte Einfach-Rückschaltung in Form einer 6-3-Rückschaltung nämlich in Form einer direkt Rückschaltung I vom sechsten Gang in den dritten Gang möglich ist. Fig. 1b veranschaulicht zudem, dass in dem zu erwartenden, bestimmten Beschleunigungszeitraum Δt_{B} zudem anschließend keine weitere Hochschaltung mehr erforderlich ist.

Fig. 1b zeigt, dass in dem zu erwartenden, bestimmten Beschleunigungszeitraum Δt_{B} im Fall einer Rückschaltung in den dritten Gang als zweiten, höheren Sollzielgang Z+1 folglich lediglich eine Schaltung I erforderlich wäre.

Fig. 1b zeigt zudem, dass die nach Durchlaufen des zu erwartenden, bestimmten Beschleunigungszeitraums Δt_{B} durch die in Fig. 1a erläuterte Rückschaltung in den zweiten Gang als ersten Sollzielgang Z erreichbare Fahrzeuggeschwindigkeit v1, zum Beispiel von 100 km/h, durch die in Fig. 1b gezeigte Rückschaltung in den dritten Gang als zweiten, höheren Sollzielgang Z+1 in einem geringeren Zeitraum Δt, zum Beispiel von 3 s, erreichbar ist.

Zudem zeigt Fig. 1b, dass der resultierende Beschleunigungsverlauf im Bereich der Rückschaltung I lediglich eine geringe Beschleunigungsverzögerung und keinen Beschleunigungseinbruch aufweist und somit insgesamt "harmonischer" als der in Fig. 1a gezeigte Beschleunigungsverlauf ist.

Gemäß dem Verfahren wird als Zielgang derjenige Sollzielgang ausgewählt, welcher über den zu erwartenden, bestimmten Beschleunigungszeitraum Δt_{B} die höchste Fahrzeugbeschleunigung ermöglicht und/oder die wenigsten Schaltvorgänge erfordert. Aus einem Vergleich von Fig. 1a und 1b ist ersichtlich, dass in dem Verfahren demnach der zweite, höhere Sollzielgang, nämlich der dritte Gang, als Zielgang ausgewählt wird. Die Auswahl des Zielgangs kann beispielsweise durch eine Fahrstrategie erfolgen. Der ausgewählte Zielgang kann dann von der Fahrstrategie an eine Getriebesteuerung übergeben werden. Das Verfahren wird insbesondere mit Hilfe eines Steuergerätes und/oder entsprechender Mikroprozessoren realisiert.

### Bezugszeichenliste

- FP: Fahrpedalwert
- v: Fahrzeuggeschwindigkeit
- b: Fahrzeugbeschleunigung
- t: Zeit

- M: Motorwellendrehzahl
- G1: Drehzahl erste Getriebeeingangswelle
- G2: Drehzahl zweite Getriebeeingangswelle

- Z: erster Sollzielgang
- Z+1: mindestens ein zweiter, höherer Sollzielgang
- Δt_{B}: zu erwartender, bestimmter Beschleunigungszeitraum
- v1: Fahrzeuggeschwindigkeit für eine Rückschaltung in den ersten Sollzielgang
- Δt: Zeitraum, über welchen die Fahrzeuggeschwindigkeit für eine Rückschaltung in den ersten Sollzielgang v1 durch mindestens eine Rückschaltung in den mindestens einen zweiten, höheren Sollzielgang Z+1 erreichbar ist

## Patentansprüche

1. Verfahren zur Steuerung eines Automatikgetriebes eines Fahrzeuges, insbesondere eines Doppelkupplungsgetriebes, wobei bei einem Beschleunigungsvorgang des Fahrzeugs mindestens eine oder mehrere Rückschaltungen durchgeführt werden und ausgehend von einem Quellgang ein Zielgang eingelegt wird, **dadurch gekennzeichnet, dass** für eine Rückschaltung in einen ersten Sollzielgang (Z) und für mindestens eine Rückschaltung in mindestens einen zweiten höheren Sollzielgang (Z+1) über einen zu erwartenden, bestimmten Beschleunigungszeitraum (Δt_{B}) und unter Berücksichtigung von in dem zu erwartenden, bestimmten Beschleunigungszeitraum (Δt_{B}) zu erwartenden Schaltvorgängen die jeweilige Fahrzeugbeschleunigung berechnet wird und als Zielgang derjenige Sollzielgang (Z, Z+1) ausgewählt wird, welcher über den zu erwartenden, bestimmten Beschleunigungszeitraum (Δt_{B}) die höchste Fahrzeugbeschleunigung ermöglicht und/oder die wenigsten Schaltvorgänge erfordert, wobei sich der zu erwartende, bestimmte Beschleunigungszeitraum (Δt_{B}) zumindest bis zum Abschluss einer auf die Rückschaltung folgende Hochschaltung erstreckt.

2. Verfahren nach Anspruch 1, **dadurch gekennzeichnet, dass** für die Rückschaltung in den ersten Sollzielgang (Z) eine Fahrzeuggeschwindigkeit (v1) berechnet wird, welche nach Durchlaufen des zu erwartenden, bestimmten Beschleunigungszeitraums (Δt_{B}) unter Berücksichtigung von in dem zu erwartenden, bestimmten Beschleunigungszeitraum (Δt_{B}) folgenden Schaltvorgängen erreichbar ist, und dann der Zeitraum (Δt) berechnet wird, über welchen (Δt) diese Fahrzeuggeschwindigkeit (v1) durch die mindestens eine Rückschaltung in den mindestens einen zweiten, höheren Sollzielgang (Z+1) erreichbar ist, und als Zielgang derjenige Sollzielgang (Z, Z+1) ausgewählt wird, durch welchen (Z, Z+1) diese Fahrzeuggeschwindigkeit (v1) in einem geringeren Zeitraum (Δt, Δt_{B}) erreichbar ist.

3. Verfahren nach Anspruch 2, **dadurch gekennzeichnet, dass** die Berechnung der Fahrzeugbeschleunigung und/oder der Fahrzeuggeschwindigkeit (v1) unter Berücksichtigung der Topographie, insbesondere der Steigung, des in dem zu erwartenden, bestimmten Beschleunigungszeitraum (Δt_{B}) von dem Fahrzeug zu erwartenden, durchfahrenen Geländes erfolgt.

4. Verfahren nach einem der Ansprüche 2 oder 3, **dadurch gekennzeichnet, dass** die Berechnung der Fahrzeugbeschleunigung und/oder der Fahrzeuggeschwindigkeit (v1) unter Berücksichtigung der aktuellen Beladung des Fahrzeugs erfolgt.

5. Verfahren nach einem der Ansprüche 2 bis 4, **dadurch gekennzeichnet, dass** die Berechnung der Fahrzeugbeschleunigung und/oder der Fahrzeuggeschwindigkeit (v1) temperaturabhängig, insbesondere unter Berücksichtigung der temperaturabhängigen Viskosität von Hydraulikmitteln des Getriebes, erfolgt.

6. Verfahren nach einem der Ansprüche 1 bis 5, **dadurch gekennzeichnet, dass** sowohl für die Rückschaltung in den ersten Sollzielgang (Z) als auch für die mindestens eine Rückschaltung in den mindestens einen zweiten, höheren Sollzielgang (Z+1) für alle in dem zu erwartenden, bestimmten Beschleunigungszeitraum (Δt_{B}) zu erwartenden Schaltungen jeweils die Einzelschaltzeit und aus der Summe der Einzelschaltzeiten der zu erwartenden Schaltungen eine Gesamtschaltzeit berechnet wird, wobei als Zielgang derjenige Sollzielgang (Z, Z+1) ausgewählt wird, welcher über den zu erwartenden, bestimmten Beschleunigungszeitraum (Δt_{B}) die geringere Gesamtschaltzeit aufweist.

7. Verfahren nach Anspruch 6, **dadurch gekennzeichnet, dass** sich die Einzelschaltzeit einer Schaltung aus einer Gangeinlege- beziehungsweise -auslegezeit, einer Kupplungsbefüllungszeit, einer Schaltabwicklungszeit, einer Kupplungsüberschneidungszeit und einer Drehzahlüberführungszeit zusammensetzt.

8. Verfahren nach einem der vorstehenden Ansprüche, **dadurch gekennzeichnet, dass** bei der Auswahl des Zielgangs ein Gewichtungsfaktor zur Gewichtung zugunsten eines niedrigeren oder höheren Zielgangs verwendet wird.

9. Verfahren nach einem der vorstehenden Ansprüche, **dadurch gekennzeichnet, dass** der erste Sollzielgang (Z) anhand der aktuellen Motordrehzahl und/oder der aktuellen Fahrzeuggeschwindigkeit und dem aktuellen Fahrpedalwert sowie gegebenenfalls eines aktuell gewählten Schaltprogramms, beispielsweise eines Eco- oder Sport-Modus, und/oder mittels einer Leistungsbedarfsrechnung, insbesondere einer Radmomentenbedarfsrechnung, errechnet wird.

## Claims

1. Method for controlling an automatic transmission of a vehicle, in particular a double-clutch transmission, wherein, during an acceleration operation of the vehicle, at least one or more downward gear changes are carried out and, starting from a source gear, a target gear is engaged, **characterized in that** for a downward gear change to a first intended target gear (Z) and for at least one downward gear change to at least one second higher intended target gear (Z+1), the respective vehicle acceleration is calculated over a specific acceleration time period (Δt_{B}) that is to be expected and while considering gear-change operations that are to be expected in the specific acceleration time period (Δt_{B}) that is to be expected, and that intended target gear (Z, 2+1) which permits the highest vehicle acceleration over the specific acceleration time period (Δt_{B}) that is to be expected and/or requires the fewest gear-change operations is selected as the target gear, wherein the specific acceleration time period (Δt_{B}) that is to be expected extends at least as far as the conclusion of an upward gear change following the downward gear change.

2. Method according to Claim 1, **characterized in that** for the downward gear change to the first intended target gear (Z), a vehicle speed (v1) is calculated which can be reached after passing through the specific acceleration time period (Δt_{B}) that is to be expected while considering gear-change operations following in the specific acceleration time period (Δt_{B}) that is to be expected, and then the time period (Δt) over which (Δt) this vehicle speed (v1) can be reached by means of the at least one downward gear change to the at least one second higher intended target gear (Z+1) is calculated, and that intended target gear (Z, Z+1) by means of which (Z, 2+1) this vehicle speed (v1) can be reached in a shorter time period (Δt, Δt_{B}) is selected as the target gear.

3. Method according to Claim 2, **characterized in that** the calculation of the vehicle acceleration and/or the vehicle speed (v1) is carried out while considering the topography, in particular the gradient, to be expected of the area traversed by the vehicle in the specific acceleration time period (Δt_{B}) that is to be expected.

4. Method according to either of Claims 2 and 3, **characterized in that** the calculation of the vehicle acceleration and/or the vehicle speed (v1) is carried out while considering the current loading of the vehicle.

5. Method according to one of Claims 2 to 4, **characterized in that** the calculation of the vehicle acceleration and/or the vehicle speed (v1) is carried out as a function of temperature, in particular while considering the temperature-dependent viscosity of hydraulic media of the transmission.

6. Method according to one of Claims 1 to 5, **characterized in that** both for the downward gear change to the first intended target gear (Z) and for the at least one downward gear change to the at least one second higher intended target gear (Z+1), for all of the gear changes that are to be expected in the specific acceleration time period (Δt_{B}) that is to be expected, in each case the individual gear-change time and a total gear-change time calculated from the sum of the individual gear-change times of the gear changes that are to be expected is calculated, wherein that intended target gear (Z, Z+1) which has the shorter total gear-change time over the specific acceleration time period (Δt_{B}) that is to be expected is selected as the target gear.

7. Method according to Claim 6, **characterized in that** the individual gear-change time of a gear change is composed of a gear engagement and disengagement time, a clutch filling time, a gear-change processing time, a clutch overlap time and a rotational speed transfer time.

8. Method according to one of the preceding claims, **characterized in that** when selecting the target gear, a weighting factor is used for weighting in favour of a lower or higher target gear.

9. Method according to one of the preceding claims, **characterized in that** the first intended target gear (Z) is calculated by using the current engine speed and/or the current vehicle speed and the current accelerator pedal value and, if appropriate, a currently selected gear-change programme, for example an eco or sport mode, and/or by means of a required power calculation, in particular a required wheel torque calculation.

## Revendications

1. Procédé de commande d'une boîte de vitesses automatique d'un véhicule, notamment d'une boîte de vitesses à double embrayage, dans lequel, lors d'une opération d'accélération du véhicule, au moins un ou plusieurs rétrogradages sont effectués et un rapport cible est enclenché à partir d'un rapport initial, **caractérisé en ce que**, pour un rétrogradage dans un premier rapport cible de consigne (Z) et pour au moins un rétrogradage dans au moins un deuxième rapport cible de consigne plus élevé (Z+1)₁ sur une période d'accélération déterminée attendue (Δt_{B}) et en tenant compte d'opérations de changement de vitesses attendues dans la période d'accélération déterminée attendue, on calcule l'accélération respective du véhicule et on choisit comme rapport cible le rapport cible de consigne (Z, Z+1) qui permet l'accélération la plus élevée du véhicule pendant la période d'accélération déterminée attendue (Δt_{B}) et/ou qui exige le moins d'opérations de changement de vitesses, la période d'accélération déterminée attendue (At_{B}) s'étendant au moins jusqu'à la fin d'une montée de rapport qui suit le rétrogradage.

2. Procédé selon la revendication 1, **caractérisé en ce que**, pour le rétrogradage dans le premier rapport cible de consigne (Z), on calcule une vitesse du véhicule (v1) qui peut être atteinte après l'écoulement de la période d'accélération déterminée attendue (Δt_{B}) en tenant compte des opérations de changement de vitesses qui suivent dans la période d'accélération déterminée attendue (Δt_{B}), puis on calcule la période (Δt) pendant laquelle (Δt) cette vitesse du véhicule (v1) peut être atteinte par l'au moins un rétrogradage vers l'au moins un deuxième rapport cible de consigne plus élevé (Z+1), et on choisit comme rapport cible le rapport cible de consigne (Z, Z+1) par lequel (Z, Z+1) cette vitesse du véhicule (v1) peut être atteinte dans une période plus courte (Δt, Δt_{B}).

3. Procédé selon la revendication 2, **caractérisé en ce que** le calcul de l'accélération du véhicule et/ou de la vitesse du véhicule (v1) est effectué en tenant compte de la topographie, notamment de la pente, du terrain attendu parcouru par le véhicule pendant la période d'accélération déterminée attendue (Δt_{B}).

4. Procédé selon l'une quelconque des revendications 2 ou 3, **caractérisé en ce que** le calcul de l'accélération du véhicule et/ou de la vitesse du véhicule (v1) est effectué en tenant compte de la charge actuelle du véhicule.

5. Procédé selon l'une quelconque des revendications 2 à 4, **caractérisé en ce que** le calcul de l'accélération du véhicule et/ou de la vitesse du véhicule (v1) est effectué en fonction de la température, notamment en tenant compte de la viscosité dépendante de la température de fluides hydrauliques de la boite de vitesses.

6. Procédé selon l'une quelconque des revendications 1 à 5, **caractérisé en ce qu'**aussi bien pour le rétrogradage dans le premier rapport cible de consigne (Z) que pour l'au moins un rétrogradage dans l'au moins un deuxième rapport cible de consigne plus élevé (Z+1), pour tous les changements de vitesses attendus dans la période d'accélération déterminée attendue (Δt_{B}), on calcule à chaque fois le temps de changement de vitesses individuel et, à partir de la somme des temps de changement de vitesses individuels des changements de vitesses attendus, un temps de changement de vitesses total, le rapport cible de consigne (Z, Z+1) qui présente le temps de changement de vitesses total le plus faible pendant la période d'accélération déterminée attendue (Δt_{B}) étant choisi comme rapport cible.

7. Procédé selon la revendication 6, **caractérisé en ce que** le temps de changement de vitesses individuel d'un changement de vitesse se compose d'un temps d'enclenchement ou de désenclenchement du rapport, d'un temps de remplissage de l'embrayage, d'un temps de délivrance du changement de vitesse, d'un temps de croisement de l'embrayage et d'un temps de transfert de la vitesse.

8. Procédé selon l'une quelconque des revendications précédentes, **caractérisé en ce qu'**un facteur de pondération pour la pondération en faveur d'un rapport cible plus bas ou plus élevé est utilisé lors du choix du rapport cible.

9. Procédé selon l'une quelconque des revendications précédentes, **caractérisé en ce que** le premier rapport cible de consigne (Z) est calculé à l'aide du régime moteur actuel et/ou de la vitesse actuelle du véhicule et de la valeur actuelle de la pédale d'accélérateur ainsi que, le cas échéant, d'un programme de changement de vitesse actuellement choisi, par exemple un mode éco ou sport, et/ou au moyen d'un calcul de la puissance requise, notamment un calcul du couple de roue requis.
